(19) Europäisches Patentamt
European Patent Office
Office européen des brevets

(11) Publication number: 0 081 119
A1

(12) EUROPEAN PATENT APPLICATION

(21) Application number: 82110667.1

(22) Date of filing: 18.11.82

(51) Int. Cl.³: C 08 L 83/06
C 08 K 3/26

(30) Priority: 19.11.81 JP 185692/81

(43) Date of publication of application:
15.06.83 Bulletin 83/24

(84) Designated Contracting States:
DE FR GB IT

(71) Applicant: Toray Silicone Company Limited
2-8 Nihonbashi Muromachi
Chuo-ku Tokyo 103(JP)

(72) Inventor: Saruyama, Toshio
3-11-13-1101 Tsudanuma
Narashino-shi Chiba-ken(JP)

(74) Representative: Spott, Gottfried, Dr. et al,
Patentanwälte Spott und Puschmann
Sendlinger-Tor-Platz 11
D-8000 München 2(DE)

(54) **Room temperature vulcanizable polyorganosiloxane compositions containing alcoholic and carboxylic organofunctionality.**

(57) Room temperature vulcanizable silicone rubber compositions filled with calcium carbonate are resistant to soiling when certain polyorganosiloxanes containing −COH and/or −COOH are present in the composition.

EP 0 081 119 A1

Croydon Printing Company Ltd

0081119
Toray 95

# ROOM TEMPERATURE VULCANIZABLE POLYORGANOSILOXANE COMPOSITIONS CONTAINING ALCOHOLIC AND CARBOXYLIC ORGANOFUNCTIONALITY

This invention relates to room temperature vulcanizable polyorganosiloxane compositions. More precisely, this invention relates to room temperature vulcanizable polyorganosiloxane compositions which are characterized by the fact that the postcure surface is not easily soiled and the base material with which the cured product is in contact is not contaminated.

Conventionally, room temperature vulcanizable polyorganosiloxane compositions, especially polyorganosiloxane compositions which form rubbery substances after curing at room temperature, have been widely used as electric insulating materials, blocking materials, gaskets, and sealants. However, when these room temperature vulcanizable polyorganosiloxanes are used in the above-mentioned applications, dust is easily adhered or adsorbed. In particular, when used as architectural sealants on the exteriors of buildings, liquid polyorganosiloxane slowly migrates from the cured silicone rubber to the surrounding building wall surface which absorbs the stain and the appearance of the building is impaired. A method for overcoming these drawbacks is the addition of surfactants such as polyoxyalkylene compounds or their copolymers with organopolysiloxanes to the compositions (cf. Japan Kokai Patent No. Sho 56[1981]-76453 and Japan Kokai

Patent No. Sho 56[1981]-76452). In these methods, when a surfactant is added in an amount which is adequate to prevent soiling, the adhesion which is an essential characteristic of an architectural sealant is significantly impaired. Moreover, the weather resistance of polyether bonds is poor so that if the materials are used outdoors and exposed to direct sunlight the soiling prevention effect is quickly reduced.

From Polmanteer in U. S. Patent No. 3,635,887, issued January 18, 1972, it is known to improve the adhesion of room temperature vulcanizable silicone elastomer by adding an organosilicon compound having a -COOH group and a silicon-bonded hydrolyzable group.

The inventors earnestly pursued the present study in an attempt to overcome the drawbacks of conventionally known room temperature vulcanizable polyorganosiloxane compositions that are easily soiled. This invention was achieved as a result.

## Summary of the Invention

The purpose of this invention is to offer room temperature vulcanizable polyorganosiloxane compositions with the following characteristics: the postcured surface is not easily soiled, the base material with which the cured product is in contact is not contaminated, and the durability is excellent.

This invention relates to a room temperature vulcanizable polyorganosiloxane composition comprising a product obtained by mixing (A) 100 parts by weight of polydiorganosiloxane having at least two silicon-bonded hydroxyl groups or silicon-bonded hydrolyzable groups per molecule

and a viscosity at 25°C. in the range of from 0.0003 to 0.3 $m^2/s$, the organic radicals of the polydiorganosiloxane being selected from the group consisting of monovalent hydrocarbon radicals and monovalent halogenated hydrocarbon radicals, (B) from 1 to 400 parts by weight of calcium carbonate filler, (C) an amount of an organosilicon compound sufficient to make the composition vulcanizable at room temperature, the organosilicon compound having at least an average of two silicon-bonded hydrolyzable groups per molecule, where the total number of silicon-bonded hydroxyl groups or silicon-bonded hydrolyzable groups per molecule of polydiorganosiloxane of (A) and the silicon-bonded hydrolyzable groups in the organosilicon compound exceeds 4, and (D) from 0.5 to 50 parts by weight of a polyorganosiloxane having organofunctional groups selected from alcoholic functional and carboxyl functional organic radicals where the alcoholic functional organic radicals are selected from the group consisting of

$-CH_2OH$, $-CH_2CH_2OH$, $-CH_2CH_2CH_2OH$,

$CH_3$ (on the CH) $-CHCH_2OH$, $CH_3$ (on the CH) $-CH_2CH_2CHOH$, $-(CH_2)_6OH$,

$-CH_2CH_2CH(CH_2OH)_2$, and $-CH_2CH_2COOCH_2CH_2OH$,

and where the carboxyl functional organic radicals are selected from the group consisting of

$-CH_2CH_2COOH$, $CH_3$ (on the CH) $-CHCH_2COOH$, $CH_3$ (on the CH) $-CH_2CHCOOH$,

$-CH_2CH_2CH_2COOH$, $-CH_2CH_2CH(COOH)_2$,

and $-(CH_{28}COOH$,

the inorganic radicals of the polyorganosiloxane being 0.2 to 50 percent of said organofunctional groups and the remaining organic radicals being selected from monovalent hydrocarbon radicals and monovalent halogenated hydrocarbon radicals.

Detailed Description of the Invention

The polydiorganosiloxane (A) is a significant component of the room temperature vulcanizable composition and at least two silicon-bonded hydroxyl groups or silicon-bonded hydrolyzable groups are required to complete the curing process. These groups can be present at the ends of the polydiorganosiloxane or on side chains or both. From a consideration of the postcured physical properties, they are preferably present at the ends of the molecular chain. The organic radicals of the polydiorganosiloxane can be monovalent hydrocarbon radicals such as alkyl radicals such as methyl, ethyl, propyl, and n-octyl; alkenyl radicals such as vinyl and allyl; aryl radicals such as phenyl and naphthyl; cycloalkyl radicals such as cyclohexyl and cycloheptyl and aralkyl radicals such as 2-phenylethyl and 2-phenylpropyl or monovalent halogenated hydrocarbon radicals such 3-chloropropyl and 3,3,3-trifluoroalkyl. These organic radicals can be present singly in the molecule or as a mixture of two or three types. Preferably, the organic radicals are only methyl. The viscosity of the polydiorganosiloxane at 25°C. is in the range of from 0.0003 to 0.3 $m^2/s$ (300 to 300,000 cs.). If the viscosity falls below this range, the elastic modulus of the cured product is too high and the range of applications is limited. In contrast, if the viscosity exceeds the above-mentioned range, the

manufacturing workability and the extrusion characteristics from the storage container are quite impaired. Preferably the viscosity of the polydiorganosiloxane is in the range of from 0.001 to 0.05 $m^2/s$. The groups present in the polydiorganosiloxane which participate in the crosslinking reaction are normally silicon-bonded hydroxyl groups, also referred to herein as silanol groups. However, silicon-bonded hydrolyzable groups are also applicable. Silicon-bonded hydrolyzable groups are functional groups which are capable of generating silanol groups by hydrolysis. The conventionally known functional groups are applicable. Examples of these functional groups are alkoxy, acyloxy, amino, amido, aminoxy, ketoximo and alkenoxy. The details will be explained with reference to the silicon-bonded hydrolyzable groups in component (C). The polydiorganosiloxane of Component (A) can be a single type or a mixture of two or more types. In the latter case, types with different viscosities can be used.

The calcium carbonate filler, component (B), is an essential component for achieving mixing stability between component (A), the polydiorganosiloxane, and component (D), the alcoholic functional or carboxylic functional polyorganosiloxane. Fillers whose primary component is calcium carbonate and which are used in rubbers and plastics are applicable. Regardless of the manufacturing method, particle shape, average particle diameter, or surface treatment, all such fillers are applicable. For example, a powdered calcium carbonate which is obtained by pulverizing natural calcium carbonate or a precipitated calcium carbonate which is obtained by reacting calcium

hydroxide with carbon dioxide gas in aqueous solution and subsequently collecting the precipitate can be used. In the case of a precipitated calcium carbonate, the secondary cohesion of the calcium carbonate can be prevented by adding surfactants or higher fatty acids to the reaction system. Alternatively, powdered or precipitated calcium carbonate fillers whose surface has been treated with surfactants, higher fatty acids, or silane coupling agents are applicable. In the case of powdered calcium carbonate, the average particle size normally ranges from 1 to 20 micrometers while the average particle size for the precipitated calcium carbonate normally ranges from 0.03 to 10 micrometres. Although any calcium carbonate within this range of average particle sizes is applicable, when the particle size is too large, a large amount of component (B) is needed in order to achieve mixing stability between component (A) and component (D). Therefore, it is preferable to use a calcium carbonate with an average particle size of 0.03 to 5 micrometres. If too little component (B) is compounded, the mixing stability between component (A) and component (D) is impaired and the adhesive performance during curing is reduced. If too much is added, the viscosity of the compositions becomes too high and the workability becomes poor. Therefore, the proportion of component (B) must be 1 to 400 parts by weight and preferably 10 to 300 parts by weight per 100 parts by weight of component (A).

Another reason for the use of calcium carbonate as the filler of the compositions of this invention is that the flow characteristics of the compositions can then be freely adjusted. If a

reinforcing silica filler such as finely divided silica is used as the filler, the compositions before curing become nonflowable (thixotropic) upon mixing component (D) so that the adjustment of free flowability becomes extremely difficult. If calcium carbonate is used, the advantage accrues of little change in the flowability upon the addition of component (D). Moreover, if an appropriate amount of a reinforcing silica filler is added, the flow characteristics of the compositions of this invention remain freely variable.

The component can be used in the form of a single type or a mixture of two or more types can be used.

The organosilicon compound containing an average at least two silicon-bonded hydrolyzable groups per molecule, component (C) is an essential component for forming a network structure by a condensation reaction with the silanol groups in component (A) or the silanol groups produced by the hydrolysis of silicon-bonded hydrolyzable groups in component (A); in other words, for the curing of the compositions of this invention. If component (A) contains two silanol groups or silicon-bonded hydrolyzable groups per molecule, more than an average of two silicon-bonded hydrolyzable groups is required in component (C). Therefore, three or more silicon-bonded hydrolyzable groups per molecule are required. If component (A) contains three or more silanol groups per molecule, the presence of an average of two silicon-bonded hydrolyzable groups per molecule of component (C) is sufficient. Of course, in the latter case, an organosilicon compound containing three or more silicon-bonded hydrolyzable groups per molecule can be present.

Component (C) can be used as a single type or as a mixture of two or more types having different numbers of silicon-bonded hydrolyzable groups per molecule or as a mixture of two or more types having different types of silicon-bonded hydrolyzable groups.

The expression used in the claim, "an organosilicon compound containing at least an average of two silicon-bonded hydrolyzable groups per molecule," should be interpreted as "an organosilicon compound containing at least two silicon-bonded hydrolyzable groups per molecule" if component (C) consists of only one type of organosilicon compounds. The exclusion of the compositions in which the total number of silanol groups or silicon-bonded hydrolyzable groups per molecule of component (A) and silicon-bonded hydrolyzable groups per molecule of component (C) is 4.0 or less because curing becomes impossible.

The hydrolyzable groups in component (C) are not critical as long as they are functional groups which can produce silanol groups by hydrolysis. Examples of these groups are as follows: alkoxy, acyloxy, alkenoxy, amino, ketoximo, aminoxy and amido. The alkoxy groups are expressed by

$$-Si-O-R^1$$

where $R^1$ represents monovalent hydrocarbon radicals or halogenated hydrocarbon radicals and examples are methoxy, ethoxy, n-propoxy, isopropoxy, and methoxyethoxy. The acyloxy groups are expressed by

$$-Si-O-\underset{\underset{O}{\|}}{C}-R^1$$

$R^1$ is the same as above and examples are acetoxy,

octanoyloxy and benzoyloxy. The alkenoxy groups are expressed by

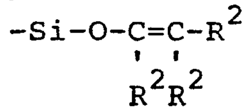

where $R^2$ is $R^1$ or a hydrogen atom and the three $R^2$ groups can be identical or different or

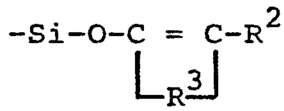

where $R^3$ represents substituted or unsubstituted $C_2$ divalent hydrocarbon groups or

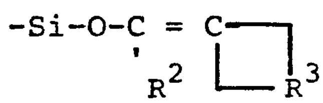

where $R^2$ and $R^3$ are the same as above or

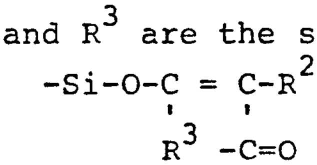

where $R^2$ and $R^3$ are the same as above. Examples are as follows: propenoxy, isopropenoxy, butenoxy and 5,5-dimethylcyclohexane-1-one-3-yloxy. The amino groups are expressed by

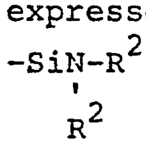

where $R^3$ is the same as above. Examples are as follows: N,N-diethylamino, N-ethylamino, N-propylamino, N-butylamino, N-cyclohexylamino and N,N-methylcyclohexylamino. The ketoximo groups are expressed by

$$-Si-O-N=C-R^1_2$$

where $R^1$ is the same as above and the two $R^1$ can be identical or different or

$$Si-O-N=C-R^3$$

where $R^3$ is the same as above. Examples are as follows: dimethyl ketoximo, methyl ethyl ketoximo, diethyl ketoximo and butanoximo. The aminoxy groups are expressed by

$$Si-O-N-R^1_2$$

where $R^1$ is the same as above or

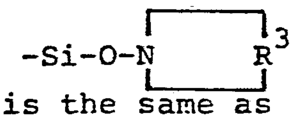

where $R^3$ is the same as above. Examples are as follows:

N,N-dimethylaminoxy, N,N-methylethylaminoxy and N,N-diethylaminoxy. The amido groups are expressed by

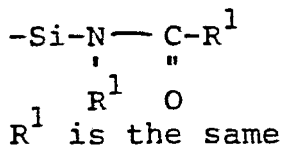

where $R^1$ is the same as above or

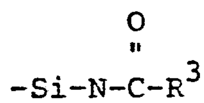

wherein $R^3$ is the same as above. Examples are as follows: N-methylacetamido, N-ethylacetamido, N-butylacetamido, N-methyl-n-butyramido, N-benzylacetamido and epsilon-caprolactamido. The silicon-bonded hydrolyzable groups in each molecule of component (C) can be identical or two or more different functional groups. Moreover, these functional groups can be bonded to the same silicon atom or to different silicon atoms.

The other atomic valences of the silicon atoms in component (C) which are not bonded to the above-mentioned hydrolyzable groups are satisfied by the carbon atoms of unsubstituted or substituted hydrocarbon groups or by oxygen atoms in siloxane

bonds. Generally, monovalent hydrocarbon groups are used; however, divalent or higher valent hydrocarbon groups are also applicable. Examples of the monovalent unsubstituted hydrocarbon radicals are as follows: alkyl radicals such as methyl, ethyl, propyl and octyl; alkenyl radicals, such as vinyl and allyl; and aryl radicals such as phenyl and naphthyl. Examples of monovalent halogenated hydrocarbon groups are as follows: halogenated hydrocarbon radicals such as chloromethyl, 3-chloropropyl, and 3,3,3-trifluoropropyl; amino-substituted hydrocarbon radicals such as 3-aminopropyl and N-2-aminoethyl-3-aminopropyl; epoxy-substituted hydrocarbon radicals such as 3-glycidylpropyl; mercapto-substituted hydrocarbon radicals such as 3-mercaptopropyl; ester-substituted hydrocarbon radicals such as beta-acetoxyethyl and gamma-methacryloxypropyl and ether-substituted hydrocarbon radicals such as beta-methoxyethyl. Two or more silicon atoms can be bonded to divalent or higher valent hydrocarbon radicals. A silane monomer is the most common component (C). However, polysiloxanes with low degrees of polymerization are also commonly used.

Component (C) can be a single compound or a combination of the above-mentioned organosilicon compounds according to the applications and purposes of the compositions. For example, alkoxy-containing silicon compounds selected from among tetraethyl silicate, tetra(n-propyl) silicate, and ethyl polysilicate can be used in order to increase the curing rate and obtain homogeneous curing characteristics. In order to obtain a low modulus and high ductility silicone rubber, a combination of several types of methylcyclosiloxanes containing 2

to 4 N,N-diethylaminoxy groups per molecule can be appropriately used. In order to obtain a single component-type room temperature-curable composition, that is, compositions which can be stored in the uncured state in a sealed container for long periods and which cure when extruded into the atmosphere, methyltriacetoxysilane, vinyltriacetoxysilane and ethyltriacetoxysilane are applicable. In order to obtain a single component-type room temperature-curable composition which does not corrode iron and base materials, the following compounds are applicable: methyltri(cyclohexylamino)silane, methyltri(dimethyl ketoximo)silane, vinyltri(dimethyl ketoximo)silane, vinyltri(methyl ethyl ketoximo)silane, methyltri(isopropenoxy)silane, vinyltri(isopropenoxy)silane and methyltri(N-ethylacetamido)silane. In order to obtain single component-type compositions which cure to a low modulus/high ductility silicone rubber, combinations of the above-mentioned organosilanes or organopolysiloxanes containing 3-4 hydrolyzable silicon-bonded groups per molecule with the following compounds are applicable: dimethyldi(N-methylacetamido)silane, methylvinyldi(N-methylacetamido)silane, dimethyldi(N,N-diethylaminoxy)silane, methylvinyldi(N,N-diethylaminoxy)silane or methylvinyldi(N-cyclohexylamino)silane. Such single component-type room temperature-curable compositions should contain at least one molecule of organosilicon compound (C) per hydroxyl radical of the polydiorganosiloxane of (A) and the amount of (C) can be up to and include 15 parts by weight per 100 parts by weight of (A).

Component (C) is added in an amount sufficient to carry out room temperature curing of the compositions of this invention. The amount depends upon the number and types of functional groups and the molecular weight of components (A) and (C). If component (A) possesses three or more hydrolyzable silicon-bonded groups per molecular, component (C) is not necessarily added. However, the addition of component (C) is essential if component (A) is selected from among compounds which have not been specified as above. In this case, it is desirable to add component (C) in an amount such that hydrolyzable silicon-bonded groups are present in an amount equivalent to or exceeding the amount of silanol groups or silicon-bonded hydrolyzable groups in component (A). If the amount of addition falls below this range, curing is insufficient and the postcure mechanical properties become impaired.

Component (D) is the characteristic component of this invention. It functions to prevent contamination of the silicone rubber itself which is produced by the curing of the compositions of this invention and contamination around the base material when the compositions are used as sealants. This function is achieved when a molecule of component (D) simultaneously exhibits both hydrophilicity due to the presence of alcoholic hydroxyl groups or carboxyl groups and an affinity for component (A) by other organic radicals.

Generally, the proportion of organic groups bonded to the alcoholic hydroxyl groups or the carboxyl groups ranges from 0.2% to 50% based on the total number of organic groups. The organic groups bonded to the alcoholic hydroxyl groups or carboxyl groups can be present at any position on

the molecule. Generally, these groups are present at the ends of the molecule or on side chains or both.

Actual examples of the organic groups bonded to the alcoholic hydroxyl groups are as follows:

$-CH_2OH$, $-CH_2CH_2OH$, $-CH_2CH_2CH_2OH$, $-\overset{CH_3}{\overset{|}{C}H}CH_2OH$, $-CH_2CH_2\overset{CH_3}{\overset{|}{C}H}OH$, $-(CH_2)_6OH$, $-CH_2CH_2CH(CH_2OH)_2$, $-CH_2CH_2COOCH_2CH_2OH$.

Actual examples of the organic groups bonded to the carboxyl groups are as follows:

$-CH_2CH_2COOH$, $-\overset{CH_3}{\overset{|}{C}H}CH_2COOH$, $-CH_2\overset{CH_3}{\overset{|}{C}H}COOH$, $-CH_2CH_2CH_2COOH$, $-CH_2CH_2CH(COOH)_2$ and $-(CH_2)_8-COOH$.

This component can possess both organic groups bonded to alcoholic hydroxyl groups and organic groups bonded to carboxyl groups. The molecular structure of this component can be linear, branched chain, cyclic or network. It is sufficient that the degree of polymerization be 2 or greater and the upper limit is not critical as long as the component can be used in liquid form or as a paste at room temperature.

The organic groups other than the organic groups bonded to the alcoholic hydroxyl groups or carboxyl groups in this component are conventionally known substituents in organopolysiloxanes such as alkyl, alkenyl, aryl, and halogenated alkyl. Common examples are methyl, vinyl, phenyl, 3,3,3-trifluoropropyl, 2-phenylethyl, octyl, and dodecyl. In particular, methyl is most preferred.

This component can be easily produced by the addition of vinyl-containing alcohols,

unsaturated fatty acids or polyhydric alcohol partial esters to the silicon-bonded hydrogen atoms in an organohydrogenpolysiloxane in the presence of a platinum catalyst. Alternatively, it can be produced by substituting the halogen atoms in a halogenated organopolysiloxane with hydroxyl groups.

The amount of addition of this component declines as the molecular weight declines and the number of hydroxyl groups and carboxyl groups increases. If too little is added, the effect of preventing soiling in and around the cured silicone rubber is poor. If too much is added, the adhesion is impaired. Thus, the amount of addition ranges from 0.5 to 50 parts by weight and preferably from 0.5 to 20 parts by weight per 100 parts by weight of component (A).

The compositions of this invention can be produced by simply mixing components (A) to (D) to homogeneity. If an appropriate compound is selected as component (C) and the components are mixed in a moisture-free container, a single component-type room temperature-curable organopolysiloxane composition is produced. If components (A) and (C) are packaged separately, a double component-type room temperature-curable organopolysiloxane composition which is mixed immediately before curing can be produced.

If desirable, curing accelerating catalysts can be added in addition to component (A) to (D) in the compositions of this invention. The curing accelerating catalysts can be added in advance to a mixture of components (A) to (D) or can be packaged separately and added immediately before curing. Metal salts of carboxylic acids and metal alcoholates are normally used as curing accelerating

catalysts. Actual examples of metal carboxylates are as follows: diorganotin dicarboxylates such as dibutyltin diacetate, dibutyltin dioctoate, and dibutyltin dilaurate; and other carboxylates such as tin octoate, iron octoate, and zinc octoate. Concrete examples of metal alcoholates are as follows: tetra-n-butyl titanate, tetraisopropyl titanate, tetraoctyl titanate, aluminum triethoxide, aluminum tributoxide, dipropyl titanate bis(acetylacetonate), and dibutyl titanate bis(ethylacetocetate).

Moreover, the following compounds and additives can be added to the compositions of this invention: polysiloxanes such as silanol-terminated polydiorganosiloxanes whose viscosity at 25°C is less than 0.0003 $m^2/s$ polydiorganosiloxanes in which one end is capped with a triorganosiloxy groups and the other end is a silanol group or silicon-bonded hydrolyzable group, and polydiorganosiloxane gums; reinforcing fillers such as fumed silica, precipitated silica, surface-hydrophobicized fumed silica, and surface-hydrophobicized precipitated silica; extending fillers such as diatomaceous earth, fine quartz powder, and carbon black; pigments such as titanium oxide and iron oxide, flame retardants such as platinum compounds and metal carbonates; heat stabilizers such as cerium oxide, cerium hydroxide, and fumed titanium dioxide, and antifungal agents.

In order to improve further the effect of soiling prevention around the cured silicone rubber, hydrophilic polymers such as polyoxyalkylene compounds, polyoxyalkylene-organopolysiloxane block copolymers and sorbitol derivatives and surfactants can be added within a range in which the adhesion is

not impaired. Because these materials can adversely effect the adhesion as shown in the examples, the amounts, if any, should be experimentally determined for each specific composition to ensure that the properties are acceptable for the specific utility.

The compositions of this invention are cured at room temperature to produce silicone rubber. Since the cured rubber itself is not easily soiled and other materials around the cured rubber are not contaminated and the original adhesion is maintained, the compositions of this invention can be widely used as sealing materials, caulking materials, coating materials and bonding agents.

Examples of this invention are described in the following. "Parts" in the examples denotes "parts by weight." The viscosity data and other experimental data were determined at 25°C. Me in the chemical formulas represents the methyl radical.

Examples 1 through 3

A mixture was prepared by mixing 100 parts an alpha, omega-dihydroxypolydimethylsiloxane with a viscosity of 0.015 $m^2/s$ and 10 parts of an alcoholic functional polymethylsiloxane shown in Table 1. Subsequently, 110 parts of a calcium carbonate filler with an average particle size of 1.4 micrometres was added to the mixture and a homogeneous composition was prepared. 5 parts of n-Propyl orthosilicate and 0.3 parts dibutyltin dilaurate were added to the composition obtained above and the resulting mixture was blended until a homogeneous mixture was obtained and a defoaming treatment was then carried out. Test specimens for the tensile adhesion test based on JIS A5758 were prepared using the compositions prepared above and a glass whose surface had been treated with a silane

priner, aluminum, and coated aluminum as adhesion substrates. The compositions were also filled into a joint (width: 20 mm, depth: 10 mm) formed by facing two sheets of enamel-finished iron plate and cured at 25°C. The cured product was left standing outdoors at an angle of 75°. After curing at 25°C for one month, a sample was immersed in warm water at 50°C for 7 days. The results of the tensile adhesion test for the tensile adhesion test speciments and the results of an examination of the degree of soiling of the surface of the enamel-finished iron plates which had been left outdoors and of the sealant surface after 6 months are presented in Table 1.

Comparison Example 1

A composition was prepared using the polyether-polysiloxane copolymer shown in Table 1 instead of the alcoholic functional polymethylsiloxane used in Examples 1 through 3. The same tests as in Examples 1 through 3 were conducted. The results are presented in Table 1.

Comparison Example 2

A composition was prepared by adding 110 parts of the alpha, omega-dihydroxypolydimethylsiloxane instead of the alcoholic functional polymethylsiloxane used in Examples 1 through 3. The same tests as in Example 1 though 3 were conducted. The results are presented in Table 1.

Comparison Example 3

Enamel-finished iron plates twice as large as those used in Example 1 through 3 were left standing outdoors. The degree of soiling after 6 months was examined and the results are presented in Table 1.

Alcoholic Functional Polymethylsiloxanes Shown in Table 1

Example 1

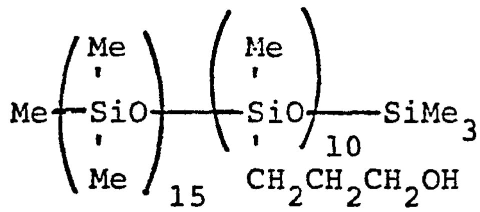

Example 2

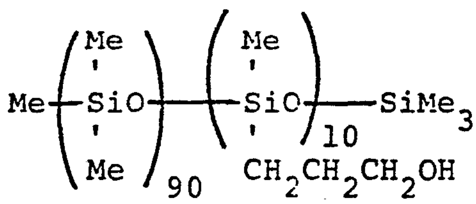

Example 3

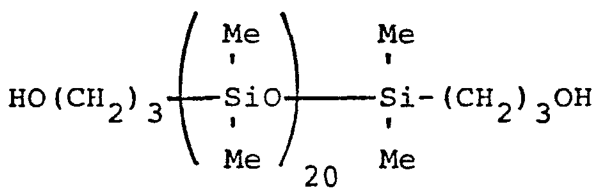

Comparison Example 1

(Polyether-polysiloxane copolymer)

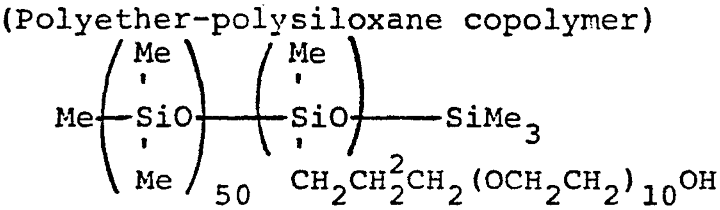

Comparison Example 2 None

Comparison Example 3 None

Table 1

| Alcoholic functional polymethylsiloxane | Tensile Adhesion: Adhesion substrate | Tensile Adhesion: Max stress kb./$cm^2$ | Tensile Adhesion: % cohesive failure | Results of examination of degree of soiling: silicone rubber surface | Results of examination of degree of soiling: enamel-finished iron surface |
|---|---|---|---|---|---|
| Example 1 | glass | 7.6 | 90 | slightly stained | slightly stained |
| | aluminum | 7.3 | 80 | | |
| | coated aluminum | 7.4 | 80 | | |
| Example 2 | glass | 7.3 | 100 | | |
| | aluminum | 7.4 | 100 | | |
| | coated aluminum | 7.0 | 100 | slightly stained | slightly stained |
| Example 3 | glass | 7.8 | 100 | | |
| | aluminum | 7.7 | 95 | | |
| | coated aluminum | 7.0 | 100 | slightly stained | slightly stained |
| Comparison Example 1 | glass | 1.2 | 0 | | |
| | aluminum | 3.5 | 0 | | |
| | coated aluminum | 1.1 | 0 | slightly stained | slightly stained |
| Comparison Example 2 | glass | 9.6 | 100 | blackish brown stains over entire surface | many stain stripes |
| | aluminum | 10.2 | 100 | | |
| | coated aluminum | 9.5 | 100 | | |
| Comparison Example 3 | --- | -- | -- | --- | slightly stained |

Examples 4 through 6

A mixture was prepared by mixing 100 parts of an alpha, omega-dihydroxypolydimethylsiloxane with a viscosity of 0.004 $m^2/s$ and 10 parts of a carboxylic acid functional polymethylsiloxane shown in Table 2. Subsequently, 100 parts of a calcium carbonate filler with an average particle size of 0.05 micrometers was added to the mixture and a homogeneous composition was obtained. 2 parts of 1,5-bis(diethylaminoxy)-3,7-diethyl-1,3,5,7-tetramethyltetracyclosiloxane and 0.3 parts of 1,3,5,7-tetra(diethylaminoxy)-1,3,5,7-tetramethyltetracyclosiloxane were carefully blended without foaming to obtain a homogeneous mixture. The same tests as in Examples 1 through 3 were conducted. The results are presented in Table 2.

Carboxylic Acid Functional Polymethylsiloxane Shown in Table 2

Example 4

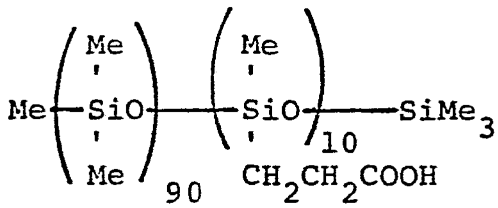

Example 5

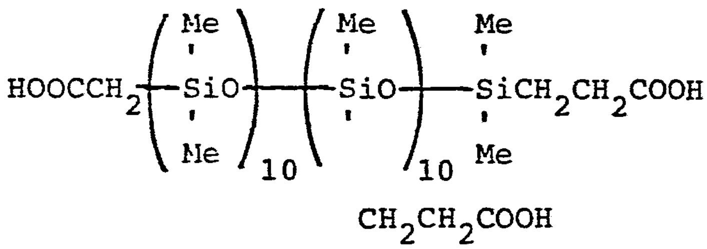

Example 6

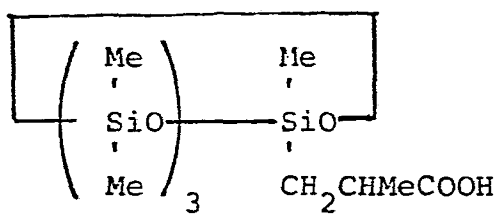

Table 2

| | Tensile Adhesion | | | Results of Examination of Degree of Soiling | |
|---|---|---|---|---|---|
| | Adhesion substrate | Max stress kg./cm$^2$ | % Cohesive failure | Silicone rubber surface | Enamel finish iron surface |
| Example 4 | glass | 9.8 | 95 | slightly stained | slightly stained |
| | aluminum | 9.6 | 95 | | |
| | coated aluminum | 9.8 | 100 | | |
| Example 5 | glass | 9.6 | 100 | | |
| | aluminum | 9.7 | 100 | | |
| | coated aluminum | 9.7 | 100 | slightly stained | slightly stained |
| Example 6 | glass | 10.1 | 100 | | |
| | aluminum | 10.5 | 100 | | |
| | coated aluminum | 10.3 | 100 | slightly stained | slightly stained |

Examples 7 through 10

A mixture was prepared by mixing 100 parts an alpha, omega-dihydroxypolydimethylsiloxane with a viscosity of 0.03 $m^2/s$, 5 parts the alcoholic functional polymethylsiloxane used in Example 1 and 110 parts of a calcium carbonate filler with an average particle size of 1.4 micrometres were blended to give a homogeneous composition. 8 parts of an organosilicon compound shown in Table 3 and curing accelerator shown in Table 3, if desirable, were blended into the homogeneous composition under nitrogen gas to obtain a homogeneous mixture. The volatiles were removed in vacuo. The same tests as in Examples 1 through 3 were conducted. The results are shown in Table 3.

Example 11

A mixture was prepared by mixing 100 parts of an alpha,omega-methyldimethoxysiloxypolydimethylsiloxane with a viscosity of 0.015 $m^2/s$, 10 parts of the alcoholic functional polymethylsiloxane used in Example 1 and 110 parts of a calcium carbonate filler with an average particle size of 1.4 micrometers were blended to give a homogeneous composition. Subsequently, 2 parts of dibutyltin dilaurate was added and blended under nitrogen gas to obtain a homogeneous composition. Defoaming was carried out in vacuo. The same tests as in Examples 1 through 3 were conducted using the composition prepared above. The results are presented in Table 3.

Organosilicon Compounds and Curing Accelerators for Examples 7 through 11

| Example | Organosilicon Compound | Curing Accelerator |
|---|---|---|
| 7 | vinyltriacetoxy-silane | ------- |
| 8 | vinyltri(methyl ethyl ketoximo) silane | ------- |
| 9 | methyltri)methyl ethyl ketoximo) silane | dibutyltin dioctoate 0.16 parts |
| 10 | methyltri-methoxysilane | tetrabutyl titanate 2 parts |
| 11 | ------ | dibutyltin dilaurate 2 parts |

TABLE 3

| | Tensile Adhesion | | | Results of examination of degree of soiling | |
|---|---|---|---|---|---|
| | Adhesion substrate | Max stress $kg/cm^2$ | % cohesive failure | silicone rubber surface | enamel-finished iron surface |
| Example 7 | glass | 7.8 | 100 | slightly stained | slightly stained |
| | aluminum | 7.6 | 100 | | |
| | coated aluminum | 7.6 | 100 | | |
| Example 8 | glass | 7.5 | 100 | | |
| | aluminum | 7.5 | 95 | | |
| | coated aluminum | 7.7 | 100 | slightly stained | slightly stained |
| Example 9 | glass | 7.3 | 90 | | |
| | aluminum | 7.5 | 100 | | |
| | coated aluminum | 7.6 | 95 | slightly stained | slightly stained |
| Example 10 | glass | 5.5 | 80 | | |
| | aluminum | 5.0 | 70 | | |
| | coated aluminum | 5.2 | 80 | slightly stained | slightly stained |
| Example 11 | glass | 4.5 | 90 | | |
| | aluminum | 4.8 | 90 | | |
| | coated aluminum | 5.0 | 95 | slightly stained | slightly stained |

Claims:

1. A room temperature vulcanizable polyorganosiloxane composition comprising a product obtained by mixing

(A) 100 parts by weight of polydiorganosiloxane having at least two silicon-bonded hydroxyl groups or silicon-bonded hydrolyzable groups per molecule and a viscosity at 25°C in the range of from 0.0003 to 0.3 $m^2/s$, the organic radicals of the polydiorganosiloxane being selected from the group consisting of monovalent hydrocarbon radicals and monovalent halogenated hydrocarbon radicals,

(B) from 1 to 400 parts by weight of calcium carbonate filler,

(C) an amount of an organosilicon compound sufficient to make the composition vulcanizable at room temperature, the organosilicon compound having at least an average of two silicon-bonded hydrolyzable groups per molecule, where the total number of silicon-bonded hydroxyl groups or silicon-bonded hydrolyzable groups per molecule of polydiorganosiloxane of (A) and of the silicon-bonded hydrolyzable groups in the organosilicon compound exceeds 4, and

(D) from 0.5 to 50 parts by weight of a polyorganosiloxane having organofunctional groups selected from alcoholic functional and carboxyl functional organic radicals where the alcoholic functional organic radicals are selected from the group consisting of

$-CH_2OH$, $-CH_2CH_2OH$, $-CH_2CH_2CH_2OH$,
$-\overset{CH_3}{\overset{|}{C}}HCH_2OH$, $-CH_2CH_2\overset{CH_3}{\overset{|}{C}}HOH$, $-(CH_2)_6OH$,
$-CH_2CH_2CH(CH_2OH)_2$, and $-CH_2CH_2COOCH_2CH_2OH$,

and where the carboxyl functional organic radicals are selected from the group consisting of

$-CH_2CH_2COOH$, $-\overset{CH_3}{\overset{|}{C}}HCH_2COOH$, $-CH_2\overset{CH_3}{\overset{|}{C}}HCOOH$,
$-CH_2CH_2CH_2COOH$, $-CH_2CH_2CH(COOH)_2$,
and $-(CH_2)_8COOH$,

the organic radicals of the polyorganosiloxane being 0.2 to 50 percent of said organofunctional groups and the remaining organic radicals being selected from monovalent hydrocarbon radicals and monovalent halogenated hydrocarbon radicals.

2. The composition according to claim 1 in which the polydiorganosiloxane of (A) is an alpha, omega dihydroxypolydimethylsiloxane having a viscosity at 25°C in the range of 0.001 to 0.05 $m^2/s$, the calcium carbonate of (B) is present in an amount of from 10 to 300 parts by weight and has an average particle size in the range of 0.03 to 10 micrometers, the hydrolyzable groups of the organosilicon compound of (C) are alkoxy and the organosilicon compound is present in an amount of from 1 to 15 parts by weight, the remaining organic radicals of the polyorganosiloxane of (D) are methyl radicals and the polyorganosiloxane is present in an amount of 0.5 to 20 parts by weight, and the composition further comprises a curing catalyst.

3. The composition according to claim 2 in which the organosilicon compound is vinyltriacetoxysilane.

4. The composition according to claim 2 in which the organosilicon compound is

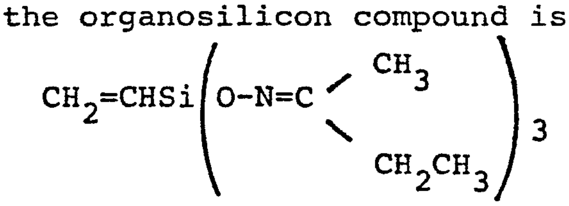

5. The composition according to claim 1 in which the organosilicon compound of (C) is methyltrimethoxysilane, the polyorganosiloxane of (D) contains $(HOCH_2CH_2CH_2)(CH_3)SiO$ units, $(CH_3)_2SiO$ units, and $(CH_3)_3SiO_{0.5}$ units, and the curing catalyst is an organotitanate.

6. The composition according to claim 1 in which the polydiorganosiloxane of (A) is an alpha, omega-methyldimethoxysiloxy polydimethylsiloxane, the calcium carbonate of (B) is present in an amount of from 10 to 300 parts by weight and has an average particle size in the range of 0.03 to 10 micrometers, the polyorganosiloxane (D) contains $(HOCH_2CH_2CH_2)(CH_3)SiO$ units, $(CH_3)_2SiO$ units, and $(CH_3)_3SiO_{0.5}$ units, and is present in an amount of from 0.5 to 20 parts by weight, and further comprises a diorganotindicarboxylate.

European Patent Office

# EUROPEAN SEARCH REPORT

0081119
Application number

EP 82 11 0667

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-2 479 842 (TORAY SILICONE CO. LTD.) * CLaims 1, 2 ; page 3, lines 31-37 ; page 10, lines 11-14 * | 1,6 | C 08 L 83/06<br>C 08 K 3/26 |
| A | DE-A-2 146 863 (GENERAL ELECTRIC CO.) * Claim 1 * | 1-3,6 | |
| A | US-A-3 628 996 (C.D. WEBER) * Column 1, line 38 - column 3, line 3 * | 1-6 | |
| A | AT-B- 316 869 (DOW CORNING CORP.) * Page 3, line 41 - page 4, line 13 ; claim * | 1,3,4 | TECHNICAL FIELDS SEARCHED (Int Cl 3) |
| A | US-A-3 957 714 (W.H. CLARK et al.) * Claim 1 * | 1 | C 08 K 3/26<br>C 08 L 83/00 |
| A | US-A-3 464 945 (A.C. MARTELLOCK) * Claim 1 * | 1 | |
| A | US-A-4 277 382 (K.C. LIN et al.) * Claim 1 * | 1 | |

The present search report has been drawn up for all claims

| Place of search | Date of completion of the search | Examiner |
|---|---|---|
| BERLIN | 24-01-1983 | IDEZ C.G. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82